# EUROPÄISCHE PATENTSCHRIFT

(11) **EP 2 229 258 B1**
(45) Veröffentlichungstag und Bekanntmachung des Hinweises auf die Patenterteilung: **29.08.2012**
(21) Anmeldenummer: 08871133.8
(22) Anmeldetag: 20.12.2008
(51) Int. Cl.: B23H 9/10

(54) **VERFAHREN ZUR HERSTELLUNG VON INTEGRAL BESCHAUFELTEN ROTOREN**
METHOD FOR PRODUCING INTEGRALLY BLADE-MOUNTED ROTORS
PROCÉDÉ POUR PRODUIRE DES ROTORS AUBAGÉS MONOBLOCS

(30) Priorität: 17.01.2008 DE 102008004776
(43) Veröffentlichungstag der Anmeldung: 22.09.2010
(73) Patentinhaber: MTU Aero Engines GmbH, 80995 München (DE)
(72) Erfinder: BAYER, Erwin, 85221 Dachau (DE); BUSSMANN, Martin, 85247 Schwabhausen (DE); PLATZ, Albin, 86510 Ried-Baindlkirch (DE)
(86) Internationale Anmeldenummer: PCT/DE2008/002143
(87) Internationale Veröffentlichungsnummer: WO 2009/089816

(56) Entgegenhaltungen:
- EP-A- 1 314 507
- EP-A- 1 430 983
- JP-A- 50 112 235
- US-A- 4 772 372

## Beschreibung

Die vorliegende Erfindung betrifft ein Verfahren zur Herstellung von integral beschaufelten Rotoren, insbesondere von Rotoren einer Gasturbine mittels eines elektrochemischen Verfahrens.

Schlanke dreidimensionale Geometrien von metallischen Bauteilen, wie zum Beispiel Bliskschaufeln, werden in der Regel aus einem Vollmaterial herausgearbeitet. Dabei erfolgt die so genannte Vorkontierung der einzelnen Schaufeln, d. h. die Herstellung von Schaufvorprofilen durch Fräsverfahren. Zudem ist bekannt Schaufelvorprofile durch Wasserstrahlschneiden oder Erodieren zu erzeugen. Zudem ist es möglich, den Schaufelzwischenraum bei Bliskschaufeln durch einen geraden oder gekrümmten Schlitz durch elektrochemische Abtrageverfahren wie das so genannte ECM (Electro Chemical Machining) oder durch Schleifen vorzukontieren. Bei dem genannten ECM-Verfahren wird in der Regel mit einer Elektrode die Oberfläche des Werkstücks bearbeitet, wobei durch elektrochemische Reaktion des Werkstücks mit dem sich zwischen dem Werkstück und der Elektrode befindlichen Elektrolyt ein Abtragen von Material am Werkstück erfolgt. Dabei wird die Elektrode als Kathode an eine Gleicbstromquelle angeschlossen. Die Elektrode bewegt sich dann mit einer vorgegebenen Geschwindigkeit auf das als Anode gepolte Bauteil zu. Die Breite des Arbeitsspaltes zwischen der Elektrode und dem Bauteil ist dabei von wesentlicher Bedeutung. Bei üblichen ECM-Verfahren wird mit Abständen von der Elektrode zum Werkstück gearbeilet, die im Bereich von 1 bis 2 mm liegen können. Zum Erzeugern feinerer Strukturen und Formen kann der Abstand auf Größen im Bereich von 10 bis 50 µm und darunter abgesenkt werden. Die erfolgreiche Anwendung eines gepulsten ECM-Prozesses (PECM) erfordert jedoch in vielen Einsatzbereichen ein gleichmäßiges Aufmaß der zu bearbeiteten Schaufel bzw. des Schaufelvorprofils. So weist bisher zum Beispiel eine elektrochemisch hergestellte Vorkontur eines Schaufelblatts einer Gasturbine, insbesondere einer Bliskschaufel, verfahrensbedingt ein Aufmaß zwischen ca. 1 und ca. 3 mm auf. Um in diesen Fällen ein notwendiges gleichmäßiges Aufmaß herzustellen, wird bisher das ungleichmäßige Aufmaß zum Beispiel mittels Fräsen bearbeitet. Derartige Verfahren sind jedoch insbesondere bei der Bearbeitung von schlanken Bauteilen, wie z. B. Schaufelblättern nur sehr eingeschränkt verwendbar, da hier die Gefahr einer Beschädigung, wie zum Beispiel einer Verformung der Bauteile besteht. Durch die Vielzahl an Verfahrensschritten ist eine derartige Vorgehensweise zur Herstellung von Schaufelvorprofilen zudem relativ zeitaufwändig und damit kostenintensiv.

Aus den Dokumenten US-A-4 772 372 und EP-A-1314 507 sind elektrochemische Verfahren zur Herstellung von integral beschaufelten Rotoren bekannt, bei welchen an das Schaufelprofil angepasste Hohlelektroden mittels einer linearen Vorschubbewegung und einer überlagerten Drehbewegung kinematisch an Schaufelkonturen mit Twist angepasst werden. Dokument US4772372 zeigt ein Verfahren mit den Merkmalen des Oberbegriffs des unabhängigen Patentanspruchs 1.

Das Dokument JP 50 112235 A betrifft ein entsprechendes Verfahren, bei dem die Schaufelzwischenräume mit massiven Elektroden vorbearbeitet und die Schaufelprofile mit Hohlelektroden nachbearbeitet werden.

Das Dokument EP-A-1 430 983 befasst sich speziell mit der Anwendung des PEM-bzw. PECM-Verfahrens zur Herstellung von integral beschaufelten Rotoren

Es ist daher Aufgabe der vorliegenden Erfindung ein gattungsgemäßes Verfahren zur Herstellung von integral beschaufelten Rotoren, insbesondere von Rotoren einer Gasturbine bereitzustellen, welches eine relativ schnelle und präzise Herstellung von Rohschaufeln mit ungefähr gleichem Aufmaß gewährleistet und somit die weitere Bearbeitung auf Sollkontur erleichtert und beschleunigt.

Gelöst wird diese Aufgabe durch ein Verfahren gemäß den Merkmalen des Anspruchs 1.

Vorteilhafte Ausgestaltungen der Erfindung sind in den jeweiligen Unteransprüchen beschrieben.

Das vorliegende Verfahren zur Herstellung von integral beschaufelten Rotoren, insbesondere von Rotoren einer Gasturbine umfasst erfindungsgemäß folgende Schritte:
c) Definieren von mindestens zwei Schnittebenen des Schaufelprofils, wobei die Schnittebenen jeweils senkrecht zu einer Fädelachse des Schaufelprofils bzw. der herzustellenden Schaufel liegen; und
d) Ermittelung eines Drehpunkts pro Schnittebene derart, dass die Drehpunkte auf einer Verbindungslinie liegen, die parallel zur Fädelachse verläuft; und dass beim Absenken der Hohlelektrode mit Drehung um die Verbindungslinie der Drehpunkte und mit Vorschub in Richtung der Verbindungslinie ein umlaufend möglichst gleichmäßiger Abstand, d. h. ein möglichst gleichmäßiges Aufmaß, zwischen der Vorkontur und der Sollkontur erzeugt wird.

Das erfindungsgemäße Verfahren gewährleistet die Herstellung von Schaufelvorprofilen bei integral beschaufelten Rotoren mit einem gleichmäßigen umlaufenden Aufmaß in allen Querschnitten durch eine einfache und durch eine Drehung den Schaufeltwist ausgleichende Senkbewegung mit einer Hohlelektrode, welche die Aufmaß-Schaufel im Inneren einschließt. Zudem ist es möglich, dass beim Absenken der Hohlelektrode gleichseitig eine Vorkonturierung von Zwischenräumen zwischen zwei benachbarten Rohschaufeln erfolgt. Das erfindungsgemäße Verfahren steht sicher, dass die Aufmaßkontur in jedem Schnitt zu einem nahezu gleichmäßigen Aufmaß auf der Konvex- und Konkav-Seite der Schaufel führt, obwohl diese eine dreidimensionale, geschwungene Form aufweist. Des Weiteren gewährleistet das erfindungsgemäße Verfahren die Verwendung einer einfachen Elektrodenkontur zum Absenken der Schaufelzwischenräume bei integral beschaufelten Rotoren.

In einer vorteilhaften Ausgestaltung des erfindungsgemäßen Verfahrens wird eine Vielzahl von Hohlelektroden gleichzeitig oder nacheinander in den Rotorgrundkörper hineinbewegt. Dabei kann vor einem Absenken der Vielzahl von Hohlelektroden eine Ermittlung der Verbindungslinie für die Bestimmung der Vorschubbewegung jeder Hohlelektrode erfolgen. Damit ist gewährleistet, dass jede erzeugte Rohschaufel ein optimiertes Aufmaß aufweist.

In einer weiteren vorteilhaften Ausgestaltung des erfindungsgemäßen Verfahrens sind die Drehpunkte mit Bezug auf das Schaufelprofil außermittig angeordnet Zudem liegen die Drehpunkte jeweils außermittig zur Kontur der Hohlelektrode. Dieses Verfahren hat sich als besonders vorteilhaft für die schnelle und präzise Herstellung von Rohschaufeln erwiesen.

In einer weiteren vorteilhaften Ausgestaltung des erfindungsgemäßen Verfahrens ist die Hohlelecktrode bis auf einen Endbereich, der auf den Rotorgrundkörper abgesenkt wird, elektrisch isolierend ausgebildet. Dadurch ist gewährleistet, dass es zu keinen ungewollten Abtragungsvorgängen an der Rohschaufel durch die Innenkontur der Elektrode kommt.

In weiteren vorteilhaften Ausgestaltungen des erfindungsgemäßen Verfahrens erfolgt nach der Herstellung der Rohschaufel gemäß den Verfahrensschritten a) bis d) eine elektrochemische Bearbeitung der Rohschaufel zur Bereitstellung strömungstechnischer Oberflächen entsprechend der Sollkontur der herzustellenden Schaufel. Die elektrochemische Bearbeitung kann dabei mittels eines präzisen elektrochemischen Abtrageverfahrens (PECM) erfolgen. Es ist im Übrigen auch denkbar, dass die Herstellung der Rohschaufel durch einen PECM-Prozess erfolgt. Auch beim präzisen elektrochen Abtragen kann die Innenund/oder Außenkontur einer mindestens einen hierfür verwendete Elektrode an die Sollkontur der Schaufel angepasst sein. Zudem kann die Präzision des Abtragevorgangs beim präzisen elektrochemischen Abtragen durch ein Oszillieren der Elektrode beim Absenken erhöht werden. Durch die genannten Maßnahmen wird es möglich, integral beschaufelte Rotoren wie Blisks und Blings effizient herzustellen.

Nachfolgend wird ein Ausführungsbeispiel des erfindungsgemäßen Verfahrens unter Bezug auf die Figuren näher beschrieben. Es zeigen
- Fig. 1: eine schematische Seitenansicht mehrerer mit dem erfindungsgemäßen Verfahren hergestellter Rohschaufeln eines integral beschaufelten Rotors; und
- Fig. 2: eine schematisch dargestellte Aufsicht auf den integral beschaufelten Rotor gemäß Figur 1.

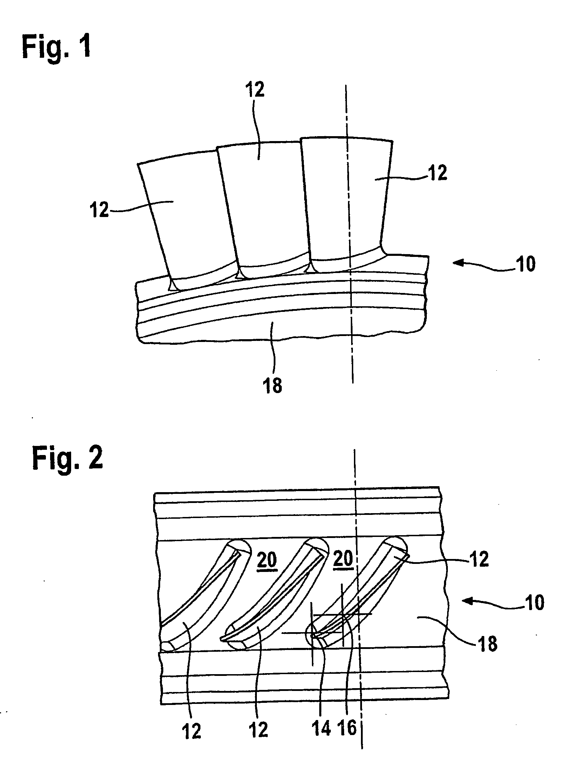

Fig. 1 zeigt eine schematische Seitenansicht mehrerer mit dem Verfahren zur Herstellung von integral beschaufelten Rotoren 10 hergestellter Rohschaufeln 12. In dem dargestellten Ausführungsbeispiel handelt es sich beim dem Rotor um eine so genannte Blisk. Dabei werden aus einem Scheibengrundkörper die Rohschaufeln 12 sowie die sich daran anschließende Rotorscheibe 18 herausgearbeitet. Die Rohschaufeln 12 weisen dabei eine Schaufelvorkontur mit gleichmäßigen Aufmaß auf, so dass sie ohne Weiteres weiterbearbeitet werden können. Die weitere Bearbeitung erfolgt dabei zum Beispiel durch einen PECM-Prozess, mit dem strömungstechnische Oberflächen entsprechend der Sollkontur der herzustellenden Endschaufel hergestellt werden kann.

Fig. 2 zeigt eine schematisch dargestellte Aufsicht auf den integral beschaufelten Rotor 10 gemäß Fig. 1. Dabei sind zwei Drehpunkte 14, 16 beispielhaft eingezeichnet. Die Drehpunkte 14, 16 entsprechend dabei jeweils einer Schnittebene durch das Schaufelprofil und zwar jeweils senkrecht zu einer Fädelachse des Schaufelprofils. Die Drehpunkte 14, 16 werden dabei pro Schnittebene derart ermittelt, dass umlaufend der Abstand zwischen einer Vorkontur und eine Sollkontur der herzustellenden Schaufel ungefähr gleich ist, wobei die Drehpunkte 14, 16 auf einer Verbindungslinie liegen, die parallel zur Fädelachse verläuft. Die Vorschubbewegung einer Hohlelektrode (nicht dargestellt), die zudem durch eine Drehung um die jeweiligen Drehpunkte 14, 16 überlagert ist, erfolgt entlang der ermittelten Verbindungslinie. Die Hohlelektrode ist dabei zumindest in einem Endbereich, der auf den Rotorgrundkörper abgesenkt wird, derart ausgebildet, dass sie eine Innenkontur aufweist, die der Vorkontur der Rohschaufel 12 angepasst ist. Des Weiteren erkennt man, dass die Drehpunkte 14,16 mit Bezug auf das Schaufelprofil der Rohschaufel außermittig angeordnet sind. Zudem wird deutlich, dass durch das Absenken der Hohlelektrode in Richtung des Rotorgrundkörpers eine Vorkonturierung der Zwischemäume 20 zwischen benachbarten Rohschaufeln 12 erfolgt. Der hergestellte integral beschaufelte Rotor 10 kann dabei aus Nickel-, Kobalt-, oder Titanbasislegierungen bestehen.

## Patentansprüche

1. Verfahren zur Herstellung von integral beschaufelten Rotoren (10), insbesondere von Rotoren einer Gasturbine, wobei das Verfahren folgende Schritte umfasst:
a) Definieren und Bereitstellen eines Schaufelprofils einer herzustellenden Schaufel mit einer Vor- und Sollkontur;
b) Bereitstellen eines Rotorgrundkörpers und elektrochemisches Bearbeiten des Rotorgrundkörpers zur Herstellung einer Rohschaufel (12) mit einer Schaufelvorkontur mittels eines Absenkens einer Hohlelektrode durch eine Vorschubbewegung in den Rotorgrundkörper, wobei die Vorschubbewegung der Hohlelektrode durch eine Drehung überlagert ist, und wobei die Hohlelektrode zumindest in einem Endbereich, der auf den Rotorgrundkörper abgesenkt wird, eine Innenkontur aufweist, die der Vorkontur der Rohschaufel (12) angepasst ist, **gekennzeichnet durch** die weiteren Schritte:
c) Definieren von mindestens zwei Schnittebenen des Schaufelprofils, wobei die Schnittebenen jeweils senkrecht zu einer Fädelachse des Schaufelprofils bzw. der herzustellenden Schaufel liegen; und
d) Ermittelung eines Drehpunkts (14, 16) pro Schnittebene derart, dass die Drehpunkte (14, 16) auf einer Verbindungslinie liegen, die parallel zur Fädelachse verläuft, und dass beim Absenken der Hohlelektrode mit Drehung um die Verbindungslinie der Drehpunkte (14, 16) und mit Vorschub in Richtung der Verbindungslinie ein umlaufend möglichst gleichmäßiger Abstand, d. h. ein möglichst gleichmäßiges Aufmaß, zwischen der Vorkontur und der Sollkontur erzeugt wird.

2. Verfahren nach Anspruch 1, **dadurch gekennzeichnet, dass** eine Vielzahl von Hohlelektroden gleichzeitig oder nacheinander in den Rotorgrundkörper hinein bewegt wird.

3. Verfahren nach Anspruch 2, **dadurch gekennzeichnet, dass** vor einem Absenken der Vielzahl von Hohlelektroden eine Ermittelung der Verbindungslinie für die Bestimmung der Vorschubbewegung jeder Hohlelektrode erfolgt.

4. Verfahren nach einem der vorhergehenden Ansprüche, **dadurch gekennzeichnet, dass** die Drehpunkte (14, 16) mit Bezug auf das Schaufelprofil außermittig angeordnet sind.

5. Verfahren nach einem der vorhergehenden Ansprüche, **dadurch gekennzeichnet, dass** im Verfahrensschritt d) eine Vorkonturierung von Zwischenräumen (20) zwischen zwei benachbarten Rohschaufeln (12) erfolgt.

6. Verfahren nach einem der vorhergehenden Ansprüche, **dadurch gekennzeichnet, dass** die Hoblelektrode bis auf einen Endbereich, der auf den Rotorgrundkörper abgesenkt wird, elektrisch isolierend ausgebildet ist

7. Verfahren nach einem der vorhergehenden Ansprüche, **dadurch gekennzeichnet, dass** nach der Herstellung der Rohschaufel (12) gemäß den Verfahrensschritten a) bis d) eine e-lektrochennische Bearbeitung der Rohschaufel (12) zur Bereitstellung strömungstechnischer Oberflächen entsprechend der Sollkontur der herzustellenden Schaufel erfolgt.

8. Verfahren nach Anspruch 7, **dadurch gekennzeichnet, dass** die elektrochemische Bearbeitung mittels eines präzisen elektrochemischen Abtragverfahrens (PECM) erfolgt.

9. Verfahren nach Anspruch 8, **dadurch gekennzeichnet, dass** beim präzisen elektrochemischen Abtragen die Innen- und/oder Außenkontur einer mindestens einen hierfür verwendeten Elektrode an die Sollkontur der Schaufel angepasst ist.

10. Verfahren nach Anspruch 8 oder 9, **dadurch gekennzeichnet, dass** beim präzisen elektrochemischen Abtragen die Elektrode beim Absenken oszillierende Bewegungen durchführt.

## Claims

1. Method for the production of integrally bladed rotors (10), in particular rotors of a gas turbine, wherein the method comprises the following steps:
a) definition and provision of a blade profile of a blade that is to be produced with a pre-contour and a desired contour;
b) provision of a rotor base body and electrochemical processing of the rotor base body in order to produce a crude blade (12) with a blade pre-contour by lowering a hollow electrode by means of an advancing movement into the rotor base body, wherein the advancing movement of the hollow electrode has a rotation superimposed on it, and wherein the hollow electrode has at least in an end region, which is lowered onto the rotor base body, an inner contour adapted to the pre-contour of the crude blade (12), **characterised by** the further steps:
c) definition of at least two sectional planes of the blade profile, wherein the sectional planes each lie perpendicularly to a threading axis of the blade profile or the blade that is to be produced; and
d) ascertainment of a point of rotation (14, 16) per sectional plane in such a way that the points of rotation (14, 16) lie on a connecting line extending parallel to the threading axis, and in that when lowering the hollow electrode with rotation about the connecting line of the points of rotation (14, 16) and with advance in the direction of the connecting line an interval that is as uniform as possible circumferentially, that is, an overmeasure that is as uniform as possible, is produced between the pre-contour and the desired contour.

2. Method according to claim 1, **characterised in that** a plurality of hollow electrodes is moved simultaneously or in succession into the rotor base body.

3. Method according to claim 2, **characterised in that** before lowering the plurality of hollow electrodes, the connecting line is ascertained for the determination of the advancing movement of each hollow electrode.

4. Method according to one of the preceding claims, **characterised in that** the points of rotation (14, 16) are arranged eccentrically in relation to the blade profile.

5. Method according to one of the preceding claims, **characterised in that** in method step d) pre-contouring of intermediate spaces (20) is effected between two adjacent crude blades (12).

6. Method according to one of the preceding claims, **characterised in that** the hollow electrode is formed so as to be electrically insulating up to an end region that is lowered onto the rotor base body.

7. Method according to one of the preceding claims, **characterised in that** after the production of the crude blade (12) in accordance with method steps a) to d) electrochemical processing of the crude blade (12) is effected in order to provide fluidic surfaces in accordance with the desired contour of the blade that is to be produced.

8. Method according to claim 7, **characterised in that** the electrochemical processing is effected by means of a precise electrochemical machining (PECM) method.

9. Method according to claim 8, **characterised in that** in the precise electrochemical machining the inner and/or outer contour of an at least one electrode used for this is adapted to the desired contour of the blade.

10. Method according to claim 8 or 9, **characterised in that** in the precise electrochemical machining the electrode executes oscillating movements during the lowering.

## Revendications

1. Procédé pour la production de rotors (10) aubagés monoblocs, notamment de rotors d'une turbine à gaz, le procédé comportant les étapes suivantes :
a) définition et mise à disposition d'un profilé d'aube avec un précontour et un contour de consigne ;
b) mise à disposition d'un corps de base de rotor et traitement électrochimique du corps de base de rotor pour la production d'une aube brute (12) avec un précontour d'aube à l'aide d'un abaissement d'une électrode creuse par un mouvement d'avance dans le corps de base du rotor, une rotation se superposant au mouvement d'avance de l'électrode creuse, et l'électrode creuse présentant, au moins dans une zone d'extrémité abaissée sur le corps de base de rotor, un contour intérieur qui est adapté au précontour de l'aube brute (12), **caractérisé par** les autres étapes suivantes :
c) définition d'au moins deux plans de coupe du profilé d'aube, les plans de coupe se trouvant chacun perpendiculairement à un axe d'enfilage du profilé d'aube ou de l'aube à produire ; et
d) détermination d'un point de rotation (14, 16) par plan de coupe de telle manière que les points de rotation (14, 16) se situent sur une ligne de liaison qui s'étend parallèlement à l'axe d'enfilage, et en ce que lors de l'abaissement de l'électrode creuse avec rotation autour de la ligne de liaison des points de rotation (14, 16) et avec avance en direction de la ligne de liaison, une distance la plus régulière possible en rotation, c'est-à-dire une surépaisseur la plus uniforme possible entre le précontour et le contour de consigne est générée.

2. Procédé selon la revendication 1, **caractérisé en ce qu'**une pluralité d'électrodes creuses est déplacée simultanément ou les unes après les autres dans le corps de base de rotor.

3. Procédé selon la revendication 2, **caractérisé en ce qu'**une évaluation de la ligne de liaison pour la détermination du mouvement d'avance de chaque électrode creuse est effectuée avant un abaissement de la pluralité d'électrodes creuses.

4. Procédé selon l'une quelconque des revendications précédentes, **caractérisé en ce que** les points de rotation (14, 16) sont disposés de manière excentrée par rapport au profilé d'aube.

5. Procédé selon l'une quelconque des revendications précédentes, **caractérisé en ce qu'**un précontournage d'espaces intérieurs (20) est effectué entre deux aubes brutes (12) voisines contiguës à l'étape de procédé d).

6. Procédé selon l'une quelconque des revendications précédentes, **caractérisé en ce que** l'électrode creuse est réalisée de manière à être isolée électriquement jusqu'à une zone d'extrémité qui est abaissée sur le corps de base de rotor.

7. Procédé selon l'une quelconque des revendications précédentes, **caractérisées en ce qu'**après la production de l'aube brute (12) selon les étapes de procédé a) à d), un traitement électrochimique de l'aube brute (12) est effectué pour la mise à disposition de surfaces selon les techniques d'écoulement fluide en fonction du contour de consigne de l'aube à produire.

8. Procédé selon la revendication 7, **caractérisé en ce que** le traitement électrochimique est effectué à l'aide d'un procédé d'usinage électrochimique précis (PECM).

9. Procédé selon la revendication 8, **caractérisé en ce que** lors de l'usinage électrochimique précis, le contour intérieur et/ou extérieur d'au moins une électrode utilisée à cet effet est adapté au contour de consigne de l'aube.

10. Procédé selon la revendication 8 ou 9, **caractérisé en ce que** lors de l'usinage électrochimique précis, l'électrode réalise des mouvements oscillants lors de l'abaissement.
